**Europäisches Patentamt**

**European Patent Office**

**Office européen des brevets**

(19)

(11) Veröffentlichungsnummer : **0 429 472 B1**

(12) **EUROPÄISCHE PATENTSCHRIFT**

(45) Veröffentlichungstag der Patentschrift :
**17.06.92 Patentblatt 92/25**

(51) Int. Cl.$^5$ : **G01C 19/38**

(21) Anmeldenummer : **89908159.0**

(22) Anmeldetag : **07.07.89**

(86) Internationale Anmeldenummer :
**PCT/EP89/00778**

(87) Internationale Veröffentlichungsnummer :
**WO 90/02311 08.03.90 Gazette 90/06**

(54) **VERFAHREN ZUR VERBESSERUNG DES NORDUNGSERGEBNISSES.**

(30) Priorität : **20.08.88 DE 3828410**

(43) Veröffentlichungstag der Anmeldung :
**05.06.91 Patentblatt 91/23**

(45) Bekanntmachung des Hinweises auf die
Patenterteilung :
**17.06.92 Patentblatt 92/25**

(84) Benannte Vertragsstaaten :
**DE FR GB IT**

(56) Entgegenhaltungen :
**DE-A- 2 545 026**
**DE-A- 3 240 804**
**DE-A- 3 346 450**

(73) Patentinhaber : **TELDIX GmbH**
**Grenzhöfer Weg 36 Postfach 105608**
**W-6900 Heidelberg 1 (DE)**

(72) Erfinder : **SINDLINGER, Rainer**
**Haagackerweg 4**
**W-6945 Hirschberg (DE)**
Erfinder : **WOLL, Bernhard**
**Röntgenstrasse 3**
**W-7525 Bad Schönborn (DE)**

(74) Vertreter : **Wiechmann, Manfred, Dipl.-Ing.**
**ANT Nachrichtentechnik GmbH**
**Patentabteilung Gerberstrasse 33**
**W-7150 Backnang (DE)**

## Beschreibung

### Problemstellung und Stand der Technik

Nordsuchende bzw. nordbestimmende Kreisel (NSK) dienen meist zur Richtungsbestimmung von beweglichen Einrichtungen (Fahrzeuge, Richtantennen, Tunnelbohrmaschinen, geodätische Instrumente usw.) und unterliegen während der Nordbestimmung, auch bei Fahrzeugstillstand, mehr oder weniger großen Störbewegungen. Es sind Methoden bekannt, z.B. mit Hilfe eines weiteren Sensors, die Empfindlichkeit gegenüber rotatorischen Störbewegungen zu reduzieren (z.B. aus DE-OS 33 46 450). In realen Systemanwendungen liegen die Störbewegungen in einem sehr weiten Frequenzbereich und ihre Amplitude übersteigt dabei das Nutzsignal oft um viele Größenordnungen; gleichzeitig wird jedoch eine hohe Meßgenauigkeit bei kurzer Meßdauer (z.B. nur 1-2 min) gefordert.

Bisher bekannte Filterverfahren liefern nicht immer hinreichend genaue Ergebnisse. Insbesondere verschlechtert sich die Meßgenauigkeit bei erhöhten Störbewegungen sowie mit zunehmender geographischer Breite, da dabei die nutzbare Komponente der Erdrotation abnimmt.

Eine weitere Möglichkeit zur Ermittlung der genauen Nordrichtung ist aus der DE-OS 32 40 804 A 1 bekannt. Bei diesem Verfahren wird aus einer momentan eingenommenen Stellung des nordsuchenden Kreisels auf die Nordrichtung geschlossen.

Dabei wird eine dem Strom im Drehmomentenerzeuger des nordsuchenden Kreisels als Meßwert für die Eingangswinkelgeschwindigkeit bzw. für das nordtreibende Moment entsprechende Größe einer Auswerteschaltung zugeführt.

In der Auswerteschaltung wird über den Mittelwert von mehreren in kurzen Zeitabständen ermittelten Meßwerten auf die Nordrichtung geschlossen.

Am Ausgang des nordsuchenden Kreisels steht ein je nach Störbewegung mehr oder weniger stark verrauschtes Nordungsergebnis zur Verfügung. Die Rauschamplitude steigt mit zunehmender geogr. Breite an. Der Rauschprozeß ist in der Regel nicht stationär, d.h. die Rauschamplitude ändert sich zeitlich: unruhige Phasen wechseln mit ruhigeren Abschnitten, niederfrequente mit höherfrequenten.

### Vorteile der Erfindung

Dieses Signal wird nun der digitalen Filterung mit den Merkmalen des Anspruchs 1 unterzogen. Dieses als "Fensteralgorithmus" bezeichnete Filter selektiert insbesondere die ruhigeren Phasen und filtert genaue Meßergebnisse nach Maßgabe von Filterkriterien aus.

Das Filterverfahren gemäß dem Anspruch 1 kann durch Vorfilterungsverfahren gemäß den Ansprüchen 2 und 3 noch verbessert werden. Weitere Abwandlungen ergeben sich aus den weiteren abhängigen Ansprüchen. Es ergeben sich dabei eine Reihe von Vorteilen, nämlich:
- sehr wirksame Ausfilterung von Störbewegungseinflüssen,
- durch Staffelung von Zeitfenstern mit unterschiedlichen Breiten und Höhen ist eine Anpassung an ein sehr weites Störspektrum möglich,
- sehr einfache Anpassung an eine spezifizierte Genauigkeit durch Vorgabe der Filterkriterien (N; $\Delta\gamma$) möglich,
- erzielte Genauigkeit ist im Gegensatz zur Nordungsdauer unabhängig von Störspektrum und geogr. Breite,
- Vorgabe einer Maximalzeit für die Nordsuche ist möglich,
- Nordungsabbruch, falls die Filterkriterien nach Verstreichen der zulässigen Dauer Tmax nicht erfüllt sind,
- geringer Rechenaufwand,
- geringer Speicherplatzbedarf im Rechner,
- Filtermethode kann bei Abbruch auch zur Bestimmung eines Ergebnisses mit geringerer Genauigkeit verwendet werden,
- dabei kann eine in bezug auf die Genauigkeit aussagefähige Kennzeichnung bestimmt und ausgegeben werden.

### Figurenbeschreibung

Anhand der Zeichnung wird ein Ausführungsbeispiel der Erfindung beschrieben.
Es zeigen:
Fig. 1 den Aufbau eines nordsuchenden Kreisels,
Fig. 2 ein Blockschaltbild der Filteranordnung,

Fig. 3 Diagramme,

Fig. 4 Diagramme zur Erläuterung der Fehlerkompensation mit dem Beschleunigungsmessersignal,

Fig. 5 Diagramme zur Erläuterung der Hauptfilterung mit dem Zeitfenster.

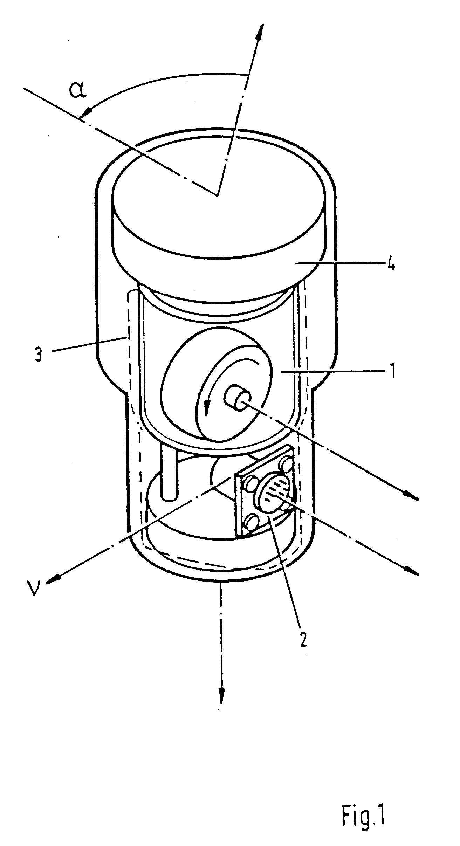

Fig. 1 zeigt den Aufbau des Kreisels: ein gasgelagerter Wendekreisel 1 ist gemeinsam mit einem Beschleunigungsmesser 2 in einem um die Hochachse drehbaren Rahmen 3 eingebaut. Der Hochrahmen 3 kann mittels eines Stellmotors 4, z.B. einen Schrittmotor, um einen Winkel $\alpha$ gedreht werden, so daß die Meßachsen des Kreisels und des Beschleunigungsmessers in diskrete Richtungen geschwenkt werden können. Die Anordnung ist in der DE-OS 33 46 450 näher beschrieben.

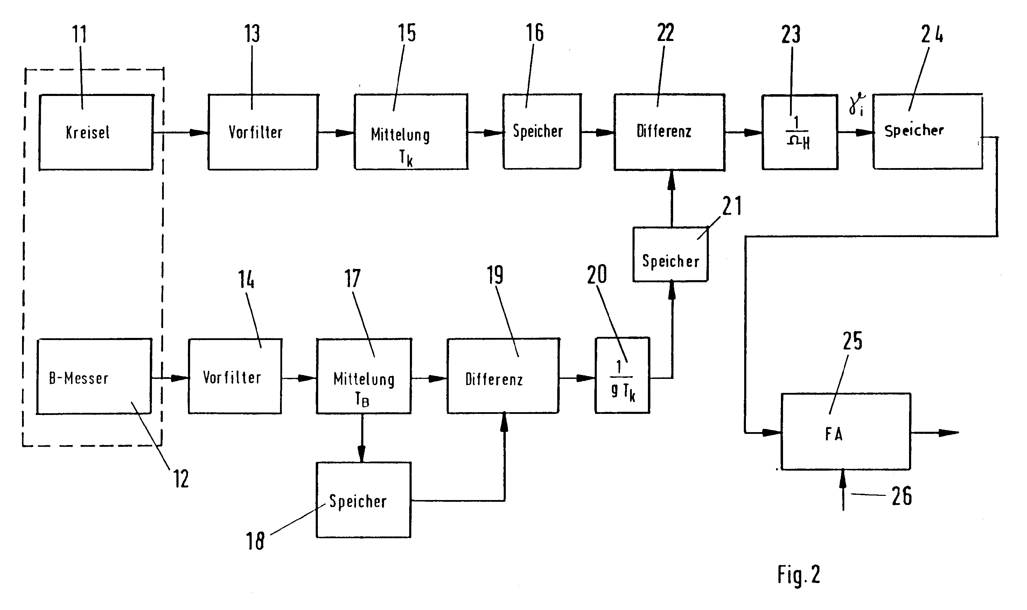

Fig. 2 zeigt ein Blockdiagramm des Filters. Mit 11 ist ein nordbestimmender Kreisel (in mehrere Stellungen verdrehbarer Kreisel) samt Auswerteschaltung bezeichnet. Der Block 11 soll in vorgegebenen Zeitabständen T Meßsignale (Winkelgeschwindigkeiten) ausgeben. Mit 12 ist ein Beschleunigungsmesser bezeichnet, der ebenfalls in Zeitabständen T Meßsignale abgibt. Beide Signale werden Filtern 13 und 14 zugeführt, die höherfrequente Störkomponenten ausfiltern. In einem Block 15 wird über einen Zeitraum $T_K$ der Mittelwert der vorgefilterten Kreiselmeßwerte gebildet und dieser Mittelwert in einem Speicher 16 abgespeichert. Zu Beginn und am Ende der Periode $T_K$ werden in einem Block 17 in Zeiträumen $T_B$ die Mittelwerte $A_a$ bzw. $A_e$ des Beschleunigungsmesserausgangssignals gebildet und mittels eines Speichers 18 und eines Differenzbildners 19 wird die Differenz ($A_e - A_e$) gebildet.

Nach Division durch die Gravitationsbeschleunigung g und das Meßintervall $T_K$ in einem Block 20 erhält man die vom Beschleunigungsmesser 12 während der Zeit $T_K$ ermittelte Neigungsänderungsgeschwindigkeit

$$\Delta\dot{v} = \frac{v_e - v_a}{T_K} = (A_e - A_a)/gT_K \cdot$$

Dieses Ergebnis wird in einem Speicher 21 abgelegt. In einem Differenzbildner 22 wird die Differenz des im Speicher 16 abgespeicherten Mittelwerts $\Omega$ des Kreiselsignals und der im Speicher 21 abgespeicherten Neigungsänderungsgeschwindigkeit $\Delta v$ gebildet. Das durch $\Delta v$ korrigierte Signal wird dann noch in einem Block 23 durch die Horizontalkomponente $\Omega_H = \omega_E\cos\phi$ des Erddrehvektors dividiert. Als Ergebnis erhält man das Nordungsergebnis $\gamma i$ zum Zeitpunkt i, das in einen Speicher 24 eingegeben wird. Dieses und benachbarte Nordungsergebnisse werden dann in einem Hauptfilter 25 mit Zeitfenster nochmals gefiltert. Die Filterkriterien (Anzahl der im Zeitfenster einbezogenen Nordungsergebnisse $\gamma i$ und Maximalabweichungen $\Delta\gamma$) können über eine Eingabe 26 variiert werden.

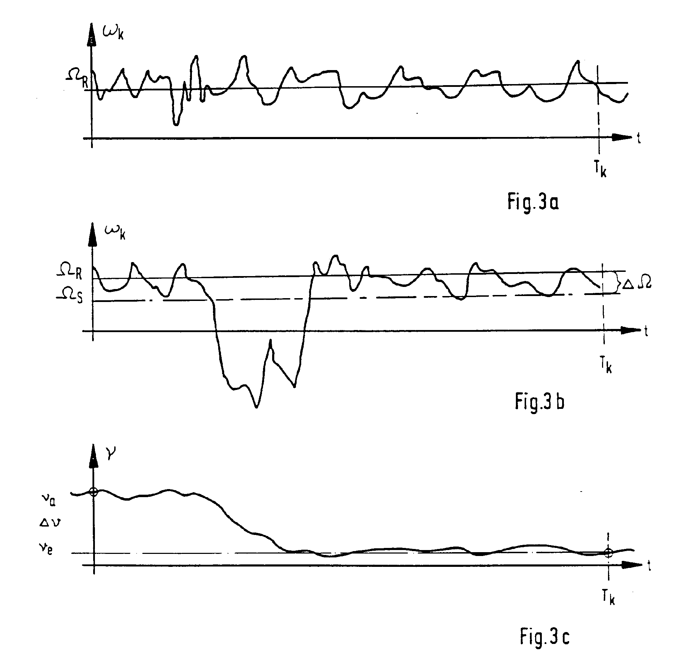

Fig. 3 zeigt die Ausgangssignale des Kreisels und des Beschleunigungsmessers. In Fig. 3a ist ein wenig gestörtes Kreiselsignal dargestellt; sein Mittelwert im Zeitraum $T_K$ ist $\Omega_R$ (Ruhe-Mittelwert). In Fig. 3b ist ein Kreiselsignal dargestellt, bei dem im mittleren Abschnitt eine größere Störbewegung auftritt. Hierdurch entsteht ein Mittelwert $\Omega_S$ bzw. ein Mittelwertsversatz $\Delta\Omega$. Dieser Versatz hat einen Nordungsfehler $\delta\gamma$ zur Folge:

$$\delta\gamma = \Delta\Omega/\Omega H.$$

Vom Beschleunigungsmesser wird gleichzeitig eine Neigungsänderung

$$\Delta v = v_e - v_a$$

um die Kreiselmeßachse sensiert, mit

$$v_a = A_a/g \text{ und } v_e = A_e/g. \text{ (siehe Fig. 3c)}.$$

Die Störwinkelgeschwindigkeit berechnet sich aus der Neigungsänderung mit

$$\Delta\Omega_S = \Delta v/T_K.$$

Hierin bedeuten:

$\Omega_R$ = zeitlicher Mittelwert des ungestörten Kreiselsignals über den Zeitraum $T_K$

$\Omega_S$ = zeitlicher Mittelwert des gestörten Kreiselsignals über den Zeitraum $T_K$

$\omega_E$ = Winkelgeschwindigkeit der Erdrotation

$\phi$ = geographische Breite

$v_a$ = Neigungswinkel zu Beginn des Meßintervalls $T_K$

$v_e$ = Neigungswinkel am Ende des Meßintervalls $T_K$

$A_e$ = Mittelwert des Beschleunigungsmessersignals über einen Zeitraum $T_B$ am Anfang des Meßintervalls $T_K$

$A_e$ = Mittelwert des Beschleunigungsmessersignals über einen Zeitraum $T_B$ am Ende des Meßintervalls $T_K$

$g$ = Gravitationsbeschleunigung.

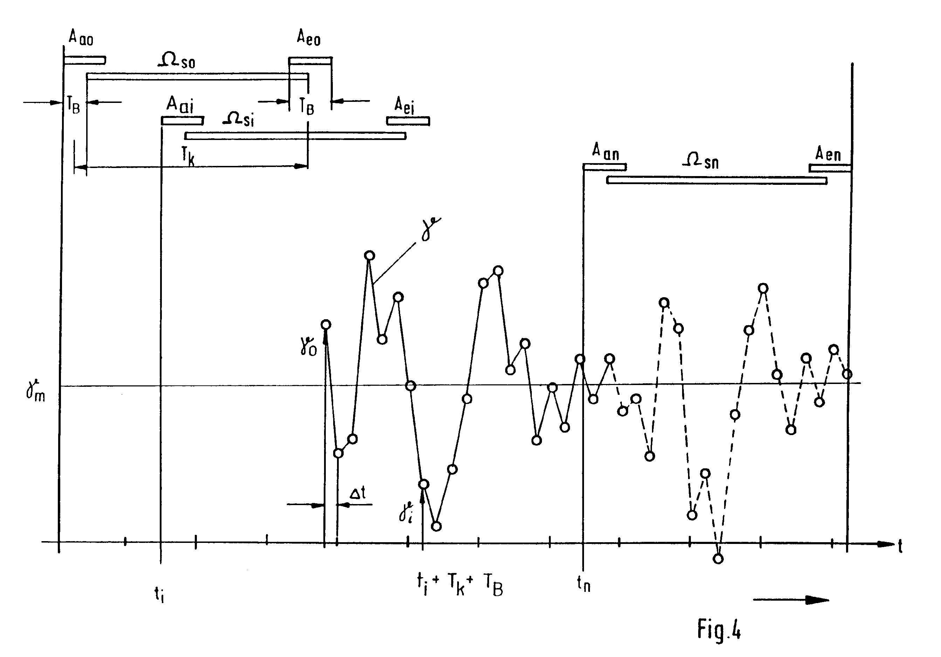

Fig. 4 zeigt eine schematische Darstellung des das Beschleunigungsmessersignal ausnutzenden Filters (15-22): die Messung beginnt zum Zeitpunkt $t_o = 0$ mit der Mittelung des Beschleunigungsmessersignals über einen Zeitraum $T_B$ (17). Das Ergebnis $A_{eo}$ wird abgespeichert (18). Zum Zeitpunkt $T_B/2$ beginnt die Mittelung des Kreisel-Signals über einen Zeitraum $T_K$ (15). Das Ergebnis $\Omega_{So}$ wird abgespeichert (16). Zum Zeitpunkt t

= $T_K$ beginnt wieder die Mittelung des Beschleunigungssignals, ebenfalls über einen Zeitraum $T_B$ (17). Das Ergebnis $A_{eo}$ wird ebenfalls abgespeichert. Aus den gespeicherten Mittelwerten wird nun nach Maßgabe der obigen Formeln das in bezug auf die rotatorischen Störbewegungen korrigierte Nordungsergebnis $\gamma_o$ berechnet (19-23).

Der geschilderte Ablauf wird in diskreten Zeitabständen $\Delta t$ (z.B. 1s) wiederholt. So liefert z.B. der zum Zeitpunkt $t_i$ gestartete, d.h. um $t_i$ zeitversetzte Ablauf, das Nordungsergebnis $\gamma_i$. Alle Zwischenergebnisse $\gamma_i$ werden abgespeichert. Dabei ergibt sich der im unteren Teil von Fig. 4 dargestellte Verlauf für das (noch stark verrauschte) Zwischen-Nordungsergebnis $\gamma$. Sein Mittelwert (gemittelt über einen langen Zeitraum) ist das gesuchte Nordungsergebnis $\gamma_m$.

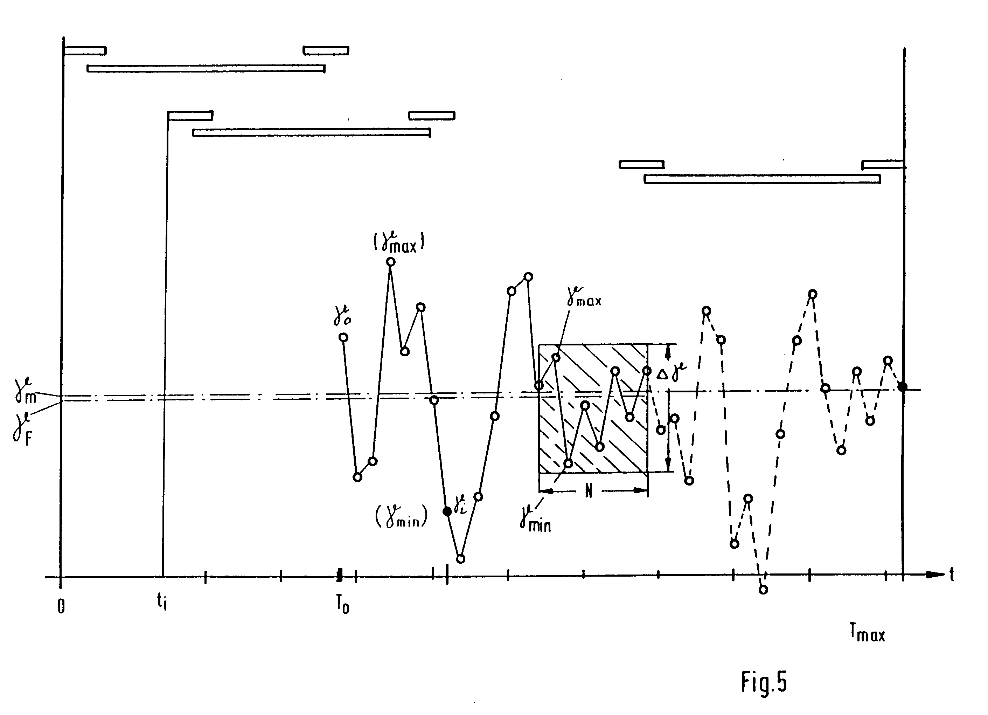

Fig. 5 zeigt die Hauptfilterung des Zwischen-Nordungsergebnisses mit Hilfe eines Zeitfensters: Dabei werden, ab dem Zeitpunkt $T_o = t_o + T_B + T_K$, jeweils über eine Anzahl N Zwischenergebnisse die Minimalwerte $\gamma min$ und die die Maximalwerte $\gamma max$ ermittelt. Sodann wird geprüft, ob die Differenz

$$\gamma max - \gamma min < \Delta \gamma$$

ist. Dabei sind $\Delta \gamma$, die zulässige Maximalabweichung ("Fensterhöhe"), und N, die Anzahl der berücksichtigten Messungen ("Fensterbreite"), die beiden Filterkriterien. Falls diese Bedingung nicht eingehalten ist, wird der Vorgang um $\Delta t$ zeitversetzt, d.h. beginnend mit dem Zeitpunkt To $+\Delta t$ wiederholt, bis entweder

a) das obige Filterkriterium erfüllt ist, oder

b) die maximale zulässige Meßdauer Tmax abgelaufen ist

Im Fall a) wird nun das Nordungsergebnis durch Mittelwertbildung aus den N Zwischenergebnissen gewonnen, für die das Kriterium erfüllt war.

Im Fall b) wir die Nordsuche abgebrochen.

Wenn die Meßwerte gespeichert sind, kann man nach Ablauf von Tmax einen neuen Durchlauf mit reduzierten Filterkriterien starten lassen und dies wiederholen, bis ein Ergebnis gefunden ist. Dabei wird zweckmäßigerweise das Ergebnis hinsichtlich der benutzten Filterkrierienge kennzeichnet, um eine Aussage über die (reduzierte) Genauigkeit zu erhalten.

Anhand der Figuren wurde der Fall erläutert, daß ein Zeitfenster verwendet wird. Es ist jedoch auch möglich, gleichzeitig mehrere Zeitfenster mit unterschiedlichen Filterkritrien zu verwenden und das Nordungsergebnis aus dem Mittelwert desjenigen Fensters zu bilden, für das das Filterkriterium als erstes erfüllt wird. Man kann die Zahl der Nordungsergebnisse N und die Maximalabweichungen $\Delta \gamma$ so wählen, daß trotz unterschiedlicher Kriterien sich gleiche Genauigkeiten ergeben.

Man kann den Anwender die Kriterien einzeln vorgeben lassen, jedoch auch Gruppen von jeweils gleiche Genauigkeit liefernden Kriterien N, $\Delta \gamma$ in einem Speicher ablegen und den Anwender die Gruppe der gewünschten Genauigkeit auswählen lassen. Es ist jedoch auch möglich Fenster vorzugeben, die mit steigender Meßdauer einen größeren Fehler zu lassen. Günstig ist es, die verschiedenen Fensterbreiten so zu wählen, daß sich N wie $1 : 2 :...:2^{(n-1)}$ verhält.

## Patentansprüche

1. Verfahren zur Filterung des mittels eines nordsuchenden Kreisels ermittelten Nordungsergebnisses, wobei in vorgegebenen Zeitabständen die ermittelten Nordungsergebnisse $\gamma i$ ausgegeben und aus mehreren (N) aufeinandёrfolgenden in einem Zeitfenster liegenden Nordungsergebnissen ein Mittelwert gebildet wird, dadurch gekennzeichnet, daß das maximale Nordungsergebnis $\gamma max$ und das minimale Nordungsergebnis $\gamma min$ innerhalb des Zeitfensters festgestell werden und daß der Mittelwert $\gamma_m$ nur dann als zu verwendendes Nordungsergebnis ausgegeben wird, wenn die Differenz $\gamma max - \gamma min < \Delta \gamma$ ist, wobei $\Delta \gamma$ eine vorgegebene Maximalabweichung darstellt.

2. Verfahren nach Anspruch 1, dadurch gekennzeichnet, daß aus den vom nordsuchenden Kreisel ausgegebenen Nordungsergebnissen die höherfrequenten Störanteile ausgefiltert werden.

3. Verfahren nach Anspruch 1 oder 2, dadurch gekennzeichnet, daß in einem um die Hochachse drehbaren Rahmen, in dem der nordsuchende Kreisel gelagert ist, auch ein Beschleunigungsmesser untergebracht ist, und daß zur Ausfilterung von niederfrequenten Störkomponenten folgende Verfahrensschritte angewandt werden:

– die ausgegebenen Kreiselmeßwerte werden über eine vorgegebene Periode $T_K$ gemittelt

– es wird die Anderung $\Delta v$ des Neigungswinkels in der Periode $T_K$ ermittelt

– es wird die Änderungsgeschwindigkeit $\Delta \dot{v}$ der Neigung durch Division durch die Periodendauer $T_K$ ermittelt

– es wird die Differenz des Kreisel-Mittelwerts und der Neigungsänderungsgeschwindigkeit gebildet

– die erhaltene Differenz wird durch die Horizontalkomponente $\Omega_H$ der Erdrotation dividiert und jeweils als ausgegebenes Nordungsergebnis weiterverarbeitet.

4. Verfahren nach einem der Ansprüche 1 - 3, dadurch gekennzeichnet, daß die Zahl (N) der in dem Zeitfenster liegenden Nordungsergebnisse einstellbar ist.

5. Verfahren nach einem der Ansprüche 1 - 4, dadurch gekennzeichnet, daß die Maximalabweichung 41 einstellbar ist.

6. Verfahren nach einem der Ansprüche 1 - 5, dadurch gekennzeichnet, daß gleichzeitig mehrere Zeitfenster mit unterschiedlicher Zahl von Nordungsergebnissen (N) und unterschiedlicher Minimalabweichung $\Delta\gamma$ verwendet werden und daß das Nordungsergebnis aus dem Mittelwert desjenigen Fensters gebildet wird, für das das betreffende Filterkriterium zuerst erfüllt ist.

7. Verfahren nach Anspruch 6, dadurch gekennzeichnet, daß die Zahl der Nordungsergebnisse N und die Maximalabweichungen $\Delta\gamma$ derart gewählt werden, daß sie etwa gleiche Genauigkeit liefern.

8. Verfahren nach Anspruch 6, dadurch gekennzeichnet, daß die Filterkriterien vom Anwender einzeln vorgebbar sind.

9. Verfahren nach Anspruch 6, dadurch gekennzeichnet, daß die Filterkriterien vom Anwender gruppenweise aus einem Speicher abrufbar sind, wobei jede einzelne Gruppe ein Maß für die gewünschte Genauigkeit ist.

10. Verfahren nach Anspruch 6, dadurch gekennzeichnet, daß mit steigender Zahl der Nordungsergebnisse (N) die Maximalabweichungen $\Delta\gamma$ derart gewählt sind, daß mit steigender Meßdauer ein größerer Meßfehler zugelassen wird.

11. Verfahren nach einem der Ansprüche 6 - 10, dadurch gekennzeichnet, daß sich die Zahl der Nordungsergebnisse (N) wie $1: 2:....:2^{(n-1)}$ verhalten.

12. Verfahren nach einem der Ansprüche 1 - 11, dadurch gekennzeichnet, daß bei der Feststellung, daß $\gamma max - \gamma min > \Delta\gamma$ ist, eine neue Ermittlung des Nordungsergebnisses eingeleitet wird.

13. Verfahren nach Anspruch 12, dadurch gekennzeichnet, daß nach einer Maximalzeit Tmax ohne verwendbares Nordungsergebnis die Nordsuche abgebrochen wird.

14. Verfahren nach Anspruch 13, dadurch gekennzeichnet, daß bei Abspeicherung aller ermittelten Nordungsergebnisse $\gamma i$ nach Abbruch der Nordsuche die Ergebnise $\gamma i$ erneut und gegebenfalls mehrfach mit schrittweise vergrößerter Maximalabweichung $\Delta\gamma$ gefiltert werden und daß das gemittelte Nordungsergebnis $\gamma_m$ ausgegeben wird, dessen Einzelergebnisse zuerst die bestehende Filterbedingung erfüllen.

15. Verfahren nach Anspruch 14, dadurch gekennzeichnet, daß das ausgegebene Ergebnis hinsichtlich des Schritts, bei dem es die Filterbedingungen erfüllt hat, gekennzeichnet ist.

16. Verfahren nach einem der Ansprüche 3 - 15, dadurch gekennzeichnet, daß die Änderungsgeschwindigkeit $\Delta v$ des Neigungswinkel $\Delta v$ aus der Differenz der Beschleunigungssignale am Anfang und Ende der Periode $T_K$ und der Multiplikation mit $\dfrac{1}{g \cdot T_K}$ erhalten wird.

17. Verfahren nach Anspruch 16, dadurch gekennzeichnet, daß im Bereich des Beginns und des Endes der Periode $T_K$ für kürzere Zeiten $T_B$ die Beschleunigungsmessersignale gemittelt werden.

18. Verfahren nach einem der Ansprüche 3 - 17, dadurch gekennzeichnet, daß die Filterparameter N, $\Delta\gamma$ und Tmax als Gerätekonstante fest eingespeichert sind.

## Claims

1. A method of filtering the north-seeking result determined by means of a north-seeking gyro, wherein the determined north-seeking results $\gamma i$ are put out at given time intervals and an average is formed from a plurality (N) of successive north-seeking results lying within a time window, <u>characterised in that</u> the maximum north-seeking result $\gamma max$ and the minimum north-seeking result $\gamma min$ within the time window are determined and the average $\gamma_m$ is put out as the north-seeking result to be employed only if the difference $\gamma max - \gamma min < \Delta\gamma$, where $\Delta\gamma$ constitutes a given maximum deviation.

2. A method according to claim 1, characterised in that the higher frequency noise components are filtered out of the north-seeking results put out by the north-seeking gyro.

3. A method according to claim 1 or 2, characterised in that an accelerometer is also accommodated in a frame that is rotatable about the elevation axis and in which the north-seeking gyro is mounted, and the following method steps are employed to filter out low frequency noise components:
   – the put-out gyro measurement values are averaged over a given time period $T_K$;
   – the change $\Delta v$ of the tilt angle is determined over the time period $T_K$;
   – the velocity of the change $\Delta \dot{v}$ of tilt is determined by dividing it by the period duration $T_K$;
   – the difference is formed between the gyro average and the rate of tilt angle change;

– the resulting difference is divided by the horizontal component $\Omega_H$ of the earth's rotation and is processed further each time as the put-out north-seeking result.

4. A method according to one of claims 1 to 3, characterised in that the number (N) of the north-seeking results lying within the time window is adjustable.

5. A method according to one of claims 1 to 4, characterised in that the maximum deviation $\Delta\gamma$ is adjustable.

6. A method according to one of claims 1 to 5, characterised in that a plurality of time windows including a different number of north-seeking results (N) and a different maximum deviation $\Delta\gamma$ are employed simultaneously and the north-seeking result is formed from the average of that window for which the respective filter criterion is met first.

7. A method according to claim 6, characterised in that the number of north-seeking results N and the maximum deviations $\Delta\gamma$ are selected in such a way that they furnish approximately the same accuracy.

8. A method according to claim 6, characterised in that the filter criteria are put in individually by the user.

9. A method according to claim 6, characterised in that the user is able to call up the filter criteria in groups from a memory, with each individual group being a measure of the desired accuracy.

10. A method according to claim 6, characterised in that, with an increasing number of north-seeking results (N), the maximum deviations $\Delta\gamma$ are selected in such a manner that with increasing measuring duration, a greater measuring error is permissible.

11. A method according to one of claims 6 to 10, characterised in that the number of north seeking results (N) is of a ratio as $1 : 2 : \ldots : 2^{(n-1)}$.

12. A method according to one of claims 1 to 11, characterised in that, upon a determination of $\gamma max - \gamma min > \Delta\gamma$, a new determination of the north-seeking result is initiated.

13. A method according to claim 12, characterised in that the north-seeking process is terminated after a maximum time period Tmax without a usable north-seeking result.

14. A method according to claim 13, characterised in that, if all determined north-seeking results $\gamma i$ are stored, the results $\gamma i$ are filtered again after the north-seeking process has been terminated and are possibly filtered repeatedly with step-wise increasing maximum deviation $\Delta\gamma$; and that average north-seeking result $\gamma_m$ is put out whose individual results meet the existing filter criterion first.

15. A method according to claim 14, characterised in that the put-out result is identified with respect to the step at which it met the filter criteria.

16. A method according to one of claims 3 to 15, characterised in that the rate of change $\Delta v$ of the tilt angle $\Delta v$ {sic] is obtained from the difference between the acceleration signals at the beginning and end of the period $T_K$ and multiplication with $\dfrac{1}{g \cdot T_K} \cdot n$

17. A method according to claim 16, characterised in that the accelerometer signals are averaged for shorter periods of time $T_B$ at the beginning and end of the period $T_K$.

18. A method according to one of claims 3 to 17, characterised in that the filter parameters N, $\Delta\gamma$ and Tmax are permanently stored as instrument constants.

## Revendications

1. Procédé de filtrage du résultat de réglage sur le nord fourni par un compas gyroscopique, où à intervalles prédéterminés, les résultats $\gamma i$ mesurés sont affichés et où une moyenne est calculée sur plusieurs (N) résultats se situant dans une fenêtre temporelle, caractérisé en ce que le résultat maximal $\gamma max$ et le résultat minimal $\gamma min$ sont déterminés à l'intérieur de la fenêtre temporelle et en ce que la moyenne $\gamma_m$ n'est affichée comme résultat à utiliser que si la différence $\gamma max - \gamma min$ est inférieure à $\Delta\gamma$, où $\Delta\gamma$ représente un écart maximal admissible prédéterminé.

2. Procédé selon la revendication 1, caractérisé en ce que les composantes perturbatrices à fréquence élevée sont éliminées dans les résultats fournis par la toupie gyroscopique.

3. Procédé selon la revendication 1 ou 2, caractérisé en ce que le boîtier vertical tournant autour de l'axe zéro qui contient la toupie contient également un accéléromètre et en ce que, pour éliminer les composantes perturbatrices à faible fréquence, on applique les étapes de procédé suivantes :
   – les valeurs fournies par la toupie sont moyennées sur une période prédéterminée $T_K$,
   – on détermine la variation $\Delta v$ de l'angle d'inclinaison sur la période $T_K$,
   – on détermine la vitesse de variation $\Delta\dot{v}$ de l'inclinaison par division par la durée de la période $T_K$,
   – on calcule la différence entre la moyenne de la toupie et la vitesse de variation de l'inclinaison,
   – la différence ainsi obtenue est divisée par la composante horizontale $\Omega_H$ de la rotation terrestre et est fournie comme résultat de la recherche du nord pour les traitements d'aval.

4. Procédé selon l'une des revendications 1 à 3, caractérisé en ce que le nombre (N) des résultats se situant dans la fenêtre temporelle peut être modifié.

5. Procédé selon l'une des revendications 1 à 4, caractérisé en ce que l'écart maximal $\Delta\gamma$ peut être modifié.

6. Procédé selon l'une des revendications 1 à 5, caractérisé en ce que l'on utilise simultanément plusieurs fenêtres temporelles avec un nombre différent de résultats (N) et des écarts maximaux admissibles $\Delta\gamma$ différents et en ce que le résultat est formé à partir de la moyenne de la première fenêtre à satisfaire le critère de filtrage appliqué.

7. Procédé selon la revendication 6, caractérisé en ce que le nombre des résultats N et les écarts maximaux admissibles $\Delta\gamma$ sont sélectionnés de manière à fournir des précisions sensiblement identiques.

8. Procédé selon la revendication 6, caractérisé en ce que les critères de filtrage peuvent être définis individuellement par l'utilisateur.

9. Procédé selon la revendication 6, caractérisé en ce que les critères de filtrage peuvent être consultés en mémoire par l'utilisateur sous la forme de groupes, chacun de ces groupes étant déterminé par le niveau de précision souhaité.

10. Procédé selon la revendication 6, caractérisé en ce que, lorsque le nombre des résultats (N) augmente, les écarts maximaux admissibles $\Delta\gamma$ sont sélectionnés de manière à ce que l'on tolère une plus grande erreur de mesure lorsque la durée de mesure augmente.

11. Procédé selon l'une des revendications 6 à 10, caractérisé en ce que le nombre des résultats (N) progresse selon le principe $1 : 2 : \ldots : 2^{(n-1)}$.

12. Procédé selon l'une des revendications 1 à 11, caractérisé en ce que, lorsqu'il est établi que $\gamma max - \gamma min > \Delta\gamma$, une nouvelle séquence de calcul est lancée.

13. Procédé selon la revendication 12, caractérisé en ce que, après un temps maximal Tmax sans résultats exploitable, la recherche du nord est interrompue.

14. Procédé selon la revendication 13, caractérisé en ce que, après l'interruption de la recherche du nord, si tous les résultats $\gamma i$ sont stockés en mémoire, les résultats $\gamma i$ sont à nouveau filtrés, éventuellement plusieurs fois, avec des écarts maximaux admissibles $\Delta\gamma$ de plus en plus grands et en ce que le résultat obtenu $\gamma_m$ fourni est celui dont les résultats individuels ont été les premiers à satisfaire la condition de filtrage définie.

15. Procédé selon la revendication 14, caractérisé en ce que le résultat fourni porte une identification de l'étape au cours de laquelle la condition de filtrage a été satisfaite.

16. Procédé selon l'une des revendications 3 à 15, caractérisé en ce que la vitesse de variation $\Delta v$ de l'angle d'inclinaison est obtenue à partir de la différence des signaux de l'accéléromètre au début et à la fin de la période $T_K$ et de la multiplication par $1/g \cdot T_K$.

17. Procédé selon la revendication 16, caractérisé en ce que les signaux de l'accéléromètre sont mesurés au début et à la fin de la période $T_K$ sur des intervalles plus courts $T_B$.

18. Procédé selon l'une des revendications 3 à 17, caractérisé en ce que les paramètres de filtrage N, $\Delta\gamma$ et Tmax sont prédéterminés et constituent des constantes de l'appareil.

α

4

3

1

2

ν

Fig.1

Fig. 2

EP 0 429 472 B1

Fig.3a

Fig.3 b

Fig.3 c

Fig.4

Fig.5